# EUROPEAN PATENT APPLICATION

(11) **EP 4 351 196 A1**
(43) Date of publication of application: **10.04.2024**
(21) Application number: 21944062.5
(22) Date of filing: 31.05.2021
(51) Int. Cl.: H04W 16/28, H04W 72/12, H04W 92/18, H04W 88/04

(54) **TERMINAL AND COMMUNICATION METHOD**

(71) Applicant: NTT DOCOMO, INC., Tokyo 100-6150 (JP)
(72) Inventor: KURITA, Daisuke, Tokyo 100-6150 (JP); KUMAGAI, Shinya, Tokyo 100-6150 (JP); HARADA, Hiroki, Tokyo 100-6150 (JP); NAGATA, Satoshi, Tokyo 100-6150 (JP); OHARA, Tomoya, Tokyo 100-6150 (JP); NAKAMURA, Takuma, Tokyo 100-6150 (JP)
(74) Representative: Hoffmann Eitle
(86) International application number: PCT/JP2021/020751
(87) International publication number: WO 2022/254554

(57) **Abstract**

A terminal includes: a transmission unit configured to transmit grouping-triggering information to one or more of other terminals; and a reception unit configured to receive feedback information items from the one or more of the other terminals. The transmission unit shares data with the other terminals and transmits the data to a base station together with the other terminals in a case where the feedback information items include at least one positive response.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In addition, discussions on 6G as the next generation wireless communication method to 5G have been started, and the radio quality exceeding 5G is expected to be achieved. For example, in 6G, discussions are being held aiming at, for example, further increasing the capacity, using a new frequency band, further reducing the latency, further increasing the reliability, and increasing the coverage in the new areas (high altitude, ocean, and universe) (for example, non-patent document 2).

In addition, regarding the coverage enhancement, it is identified that PUSCH (Physical Uplink Shared Channel) is a bottleneck channel, and the improvement of PUSCH characteristics is being discussed.

### [Citation List]

### [Non-Patent Document]

[Non-Patent Document 1] 3GPP TS 38.300 V16.4.0 (2020-12)
[Non-Patent Document 2] NTT DOCOMO, INC White Paper "5G Evolution and 6G" (2020-01)

### SUMMARY OF THE INVENTION

### [TECHNICAL PROBLEM]

In order to improve PUSCH characteristics, for example, performing repeated transmission by increasing the resources in the time domain is being discussed. On the other hand, in the frequency domain, the maximum total transmission power of a terminal is specified, and thus, it has been difficult to greatly improve transmission characteristics even if the resource is increased in the frequency domain because power density per frequency decreases.

The present invention has been made in view of the foregoing points, and the uplink channel characteristics are enabled to be improved in a wireless communication system.

### [SOLUTION TO PROBLEM]

According to the disclosed technique, a terminal is provided. The terminal includes: a transmission unit configured to transmit grouping triggering information to one or more of other terminals; and a reception unit configured to receive feedback information items from the one or more of the other terminals. The transmission unit shares data with the other terminals and transmits the data to a base station together with the other terminals in a case where the feedback information items include at least one positive response.

### [ADVANTAGEOUS EFFECTS OF INVENTION]

According to the disclosed technique, characteristics of the uplink channel are enabled to be improved in a wireless communication system.

### BRIEF DESCRIPTION OF THE DRAWINGS

[Fig. 1] Fig. 1 is a drawing illustrating a configuration example of a wireless communication system according to an embodiment of the present invention.
[Fig. 2] Fig. 2 is a drawing illustrating an example of uplink transmission in an embodiment of the present invention.
[Fig. 3] Fig. 3 is a flowchart illustrating an example of uplink transmission in an embodiment of the present invention.
[Fig. 4] Fig. 4 is a drawing illustrating an example (1) of feedback in an embodiment of the present invention.
[Fig. 5] Fig. 5 is a flowchart illustrating an example (1) of feedback in an embodiment of the present invention.
[Fig. 6] Fig. 6 is a drawing illustrating an example (2) of feedback in an embodiment of the present invention.
[Fig. 7] Fig. 7 is a flowchart illustrating an example (2) of feedback in an embodiment of the present invention.
[Fig. 8] Fig. 8 is a drawing illustrating an example (3) of feedback in an embodiment of the present invention.
[Fig. 9] Fig. 9 is a flowchart illustrating an example (3) of feedback in an embodiment of the present invention.
[Fig. 10] Fig. 10 is drawing illustrating an example of a functional structure of a base station 10 related to an embodiment of the present invention.
[Fig. 11] Fig. 11 is a drawing illustrating an example of a functional structure of a terminal 20 related to an embodiment of the present invention.
[Fig. 12] Fig. 12 is a drawing illustrating an example of a hardware structure of the base station 10 or the terminal 20 related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to by different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

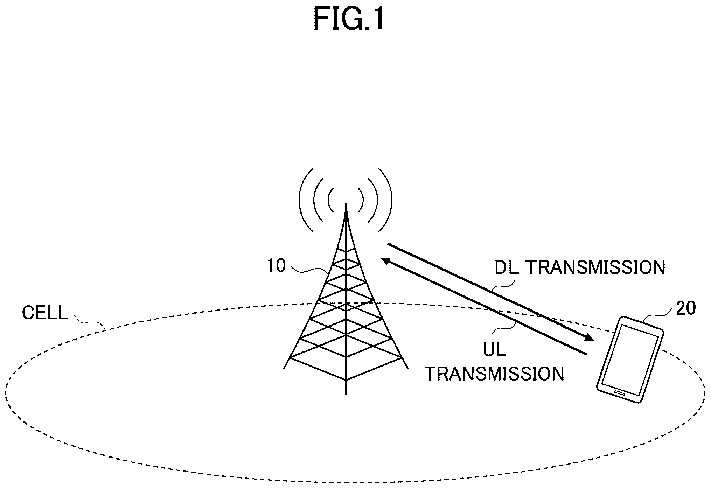

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, regarding the coverage enhancement, it has been identified that PUSCH (Physical Uplink Shared Channel) is a bottleneck channel, and the improvement of PUSCH characteristics is being discussed.

In order to improve PUSCH characteristics, for example, enhancement of PUSCH repeated transmission in the time domain is being discussed. In addition, supporting transport block processing over multi-slot PUSCH is being discussed. In addition, performing channel estimation based on joint multiple channels is being discussed.

The above-described techniques are improvement techniques in the time domain, and improve characteristics by increasing the time resources for transmitting specific data. On the other hand, in the frequency domain, the maximum total transmission power of a terminal is specified, and thus, it has been difficult to greatly improve transmission characteristics even if the resource is increased in the frequency domain because power density per frequency decreases.

Therefore, uplink transmission characteristics of a terminal may be improved by causing multiple terminals to cooperate to increase resources in the frequency direction.

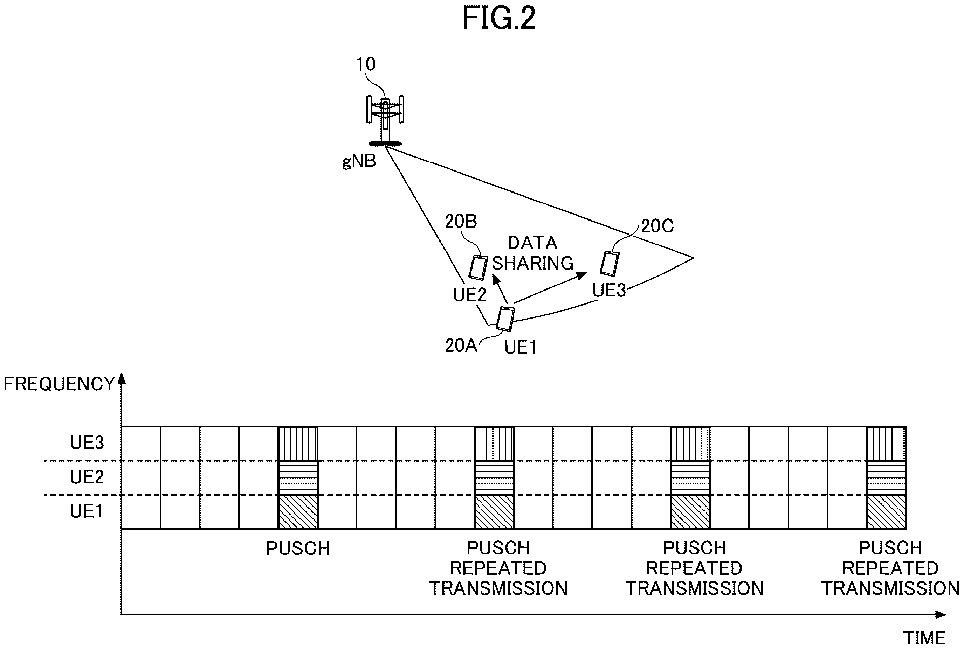

Fig. 2 is a drawing illustrating an example of uplink transmission in an embodiment of the present invention. As illustrated in Fig. 2, when UE1 performs data transmission to gNB, the transmission data is shared with UE2 and UE3, UE2 and UE3 perform transmission at the same timing using frequencies different from the frequency of UE1, and thus, the substantial total transmission power is increased and uplink transmission characteristics are improved.

In a case where the transmission illustrated in Fig. 2 is performed, it may be defined that UE1, UE2 and UE3 are being grouped or are cooperating. Hereinafter, a method of performing the data sharing and performing feedback in the group will be described in detail.

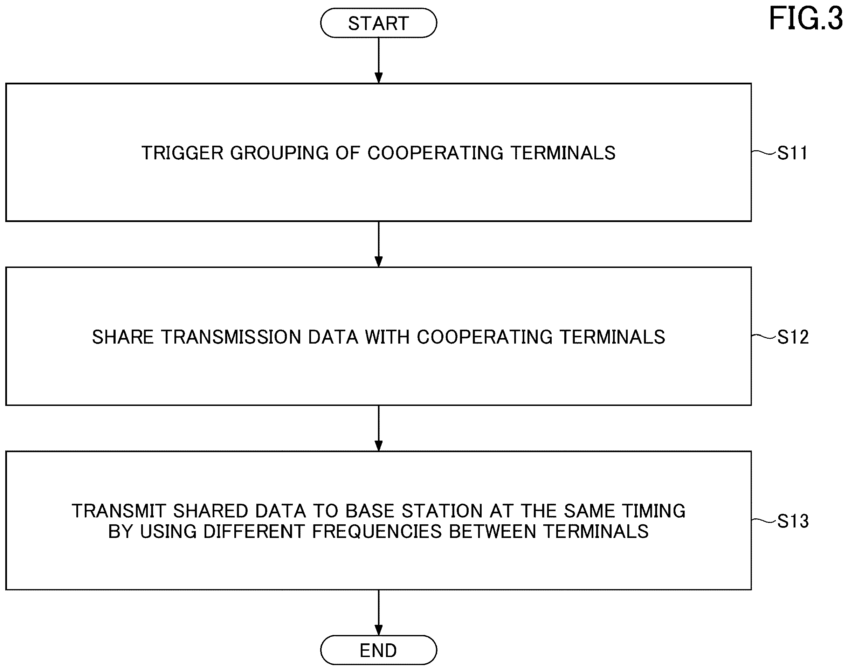

Fig. 3 is a flowchart illustrating an example of uplink transmission in an embodiment of the present invention. In step S11, the grouping-triggering terminal 20 triggers the grouping of cooperating terminals 20. For example, the grouping-triggering terminal 20 may transmit information for triggering the grouping to one or more cooperating terminals 20 as control information and/or data, and may further transmit information indicating a resource for feedback. In addition, the grouping-triggering terminal 20 may receive, from the cooperating terminals 20, feedback indicating whether the information for triggering the grouping is received.

In subsequent step S12, the grouping-triggering terminal 20 shares transmission data with the cooperating terminals 20. For example, the grouping-triggering terminal 20 may transmit the transmission data to the cooperating terminals 20, and may receive, from the cooperating terminals 20, feedback indicating whether the transmission data is received. Furthermore, the grouping-triggering terminal 20 may transmit, to the base station 10, information indicating a resource for transmitting the transmission data to be transmitted from each terminal 20 to the base station 10.

In subsequent step S13, the grouping-triggering terminal 20 and the cooperating terminals 20 transmit the shared data to the base station 10 at the same timing using different frequencies between the grouping-triggering terminal 20 and the cooperating terminals 20.

When multiple terminals cooperate or are grouped, the cooperating terminals 20 may be enabled to transmit feedback or information to the cooperation-or-grouping-triggering terminal 20. Hereinafter, terminals 20 forming a group may be described as cooperating terminals 20.

The grouping-triggering terminal 20 may perform one of the operations described in option 1-1) to option 1-3) below in order to obtain feedback from the cooperating terminals 20.

Option 1-1) Information such as HARQ-ACK and/or UE-ID may be returned using a resource for inter-terminal communication.
Option 1-2) Information such as HARQ-ACK and/or UE-ID may be returned using a resource for communication with gNB.
Option 1-3) Information such as HARQ-ACK and/or UE-ID may be returned by establishing a link (synchronization) for returning the information from the cooperating terminals 20 to the grouping-triggering terminal 20.

In addition, when NACK is received from the other terminals 20, the grouping-triggering terminal 20 may perform one of the operations described in option 2-1) and option 2-2) below.

Option 2-1) the grouping-triggering terminal 20 may retransmit the signal for grouping. In addition, the grouping-triggering terminal 20 may increase transmission power step by step in accordance with the number of retransmission times. In addition, the grouping-triggering terminal 20 may change the transmission configuration such as the transmission antenna. In addition, the grouping-triggering terminal 20 may change the destination when performing the retransmission.
Option 2-2) The grouping-triggering terminal 20 may transmit a report to gNB. Furthermore, the grouping-triggering terminal 20 may request that IDs are to be allocated to the cooperating terminals 20. In addition, the grouping-triggering terminal 20 may request that the control related to the synchronization with the cooperating terminals 20 is to be updated.

In the above-described option 1-1), option 1-2), and option 1-3), the feedback information may be information indicating whether the reception is successful, terminal IDs, etc. The cooperating terminals 20 may transmit the feedback information with respect to the information received from the grouping-triggering terminal 20 to the grouping-triggering terminal 20 only when the reception is successful, may transmit the feedback information to the grouping-triggering terminal 20 only when the reception is not successful, or may transmit the feedback information to the grouping-triggering terminal 20 when the reception is successful and when the reception is not successful. In addition, different options may be applied according to the grouping purpose or the grouping contents, and different options may coexist.

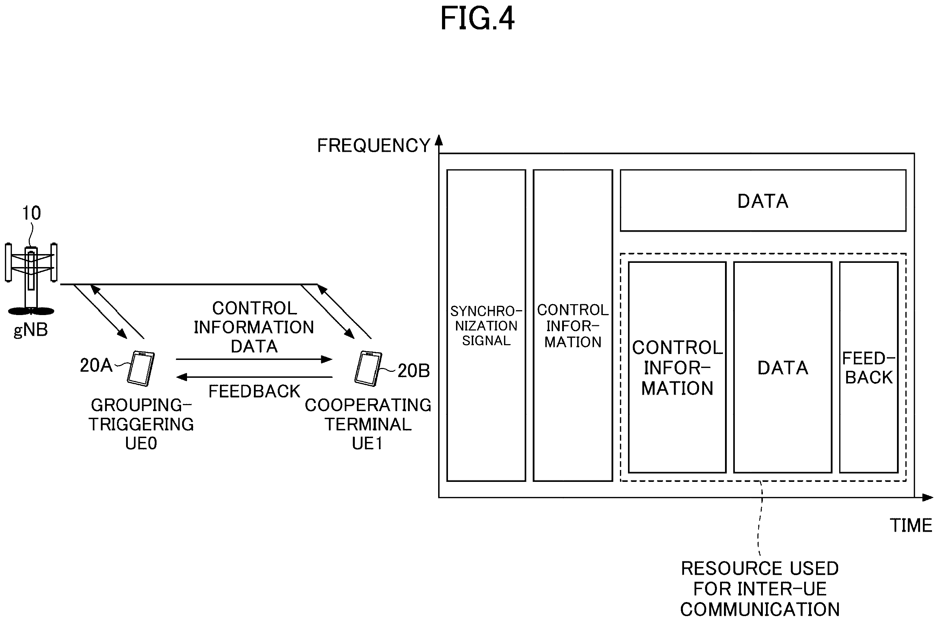

Hereinafter, the details of option 1-1) will be described. Fig. 4 is a drawing illustrating an example (1) of feedback in an embodiment of the present invention. As illustrated in Fig. 4, a cooperating terminal UE1 may transmit feedback information such as HARQ-ACK and/or UE-ID to UE0 by using a resource for inter-terminal communication. In addition, as illustrated in Fig. 4, the grouping-triggering UE0 may transmit control information and data to UE1 by using a resource for inter-terminal communication. For example, UE0 may transmit information for triggering grouping to UE1 by including the information for triggering grouping in the control information or in the data. In addition, for example, UE0 may transmit data to be transmitted to the base station 10 to UE1 by including the data to be transmitted to the base station 10 in the control information or in the data.

As illustrated in 1) or 2) below, UE1 may transmit feedback information such as HARQ-ACK and/or UE-ID to UE0 by using a resource for inter-terminal communication.

1) The resource used for the feedback may be configured or predefined. For example, the resource for the feedback may be configured from the grouping-triggering UE0 to UE1 via RRC, or may be predefined. For example, relative positions of the resource used for the feedback relative to the control channel in the time domain and/or the frequency domain may be configured or predefined. In addition, the dedicated structure for the sake of grouping, etc., may be configured or predefined.
2) The resource for the feedback may be specified from UE0 to UE1 via the control channel (for example, PSCCH).

Note that, for example, in a case where ID of UE0 is included in the control information, the data channel (for example, PSSCH) from UE0 to UE1 is not required to be transmitted. The above-described 1) and 2) may be mixed to be applied in accordance with the feedback information. For example, HARQ-ACK may be transmitted as feedback from UE1 to UE0 by applying the above-described 1) and UE-ID may be transmitted as feedback from UE1 to UE0 by applying the above-described 2).

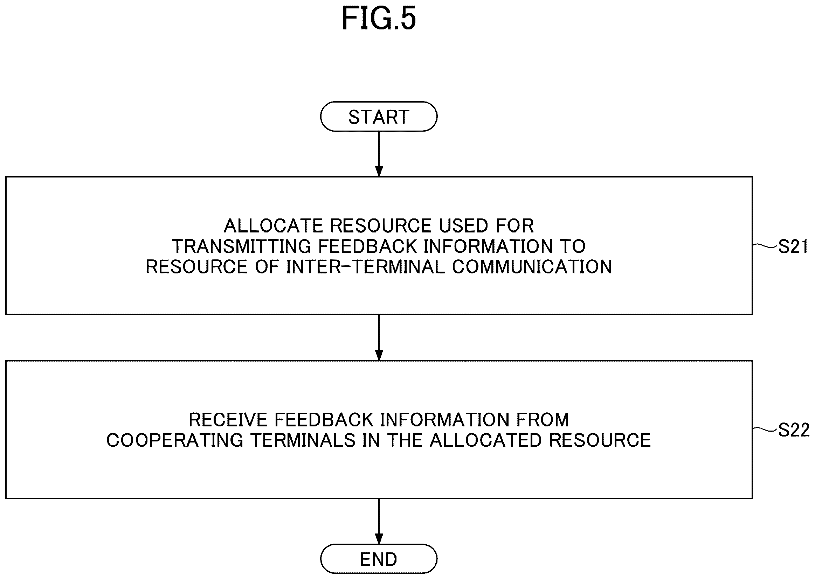

Fig. 5 is a flowchart illustrating an example (1) of feedback in an embodiment of the present invention. In step S21, UE0 allocates a resource for transmitting the feedback information to the inter-terminal resource. Alternatively, the resource for transmitting the feedback information may be predefined. In subsequent S22, the UE0 receives the feedback information from UE1 in the allocated resource. For example, step S21 and step S22 may be operations included in step S11 in Fig. 3.

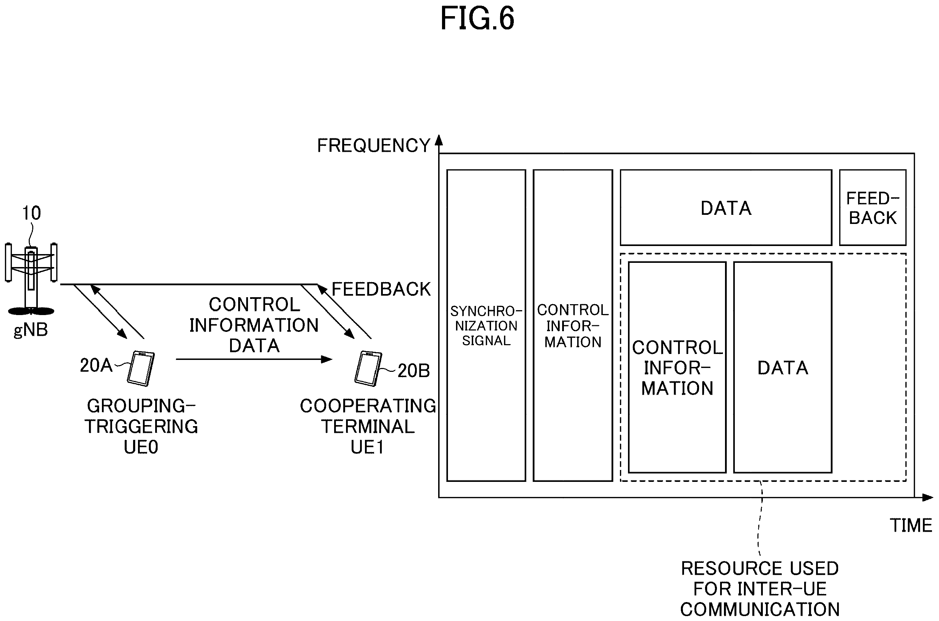

Hereinafter, the details of option 1-2) will be described. Fig. 6 is a drawing illustrating an example (2) of feedback in an embodiment of the present invention. As illustrated in Fig. 6, a cooperating terminal UE1 may transmit the feedback information such as HARQ-ACK and/or UE-ID to the base station 10. The base station 10 may obtain grouping information related to UE0, based on the feedback information. The base station 10 may indicate a UE1 related situation including the received feedback information to UE0.

As illustrated in 1) or 2) below, UE1 may transmit feedback information such as HARQ-ACK and/or UE-ID to the base station 10.

1) The resource used for the feedback may be configured or predefined. For example, the resource for the feedback information may be configured from the base station 10 or the grouping-triggering UE0 to UE1 via RRC, or may be predefined. For example, relative positions of the resource used for the feedback relative to the control channel in the time domain and/or the frequency domain may be configured or predefined.
2) The feedback resource may be specified from UE0 to UE1 via a control channel (for example, PSCCH), or may be specified from the base station 10 to UE1 via a control channel (for example, PDCCH). With respect to the resource used for feedback, the relative position may be configured or the absolute position may be configured, based on the control channel resource.

Note that, for example, in a case where ID of UE0 is included in the control information, the data channel (for example, PSSCH) from UE0 to UE1 is not required to be transmitted. The above-described 1) and 2) may be mixed to be applied in accordance with the feedback information. For example, HARQ-ACK may be transmitted as feedback from UE1 to the base station 10 by applying the above-described 1) and UE-ID may be transmitted as feedback from UE1 to the base station 10 by applying the above-described 2).

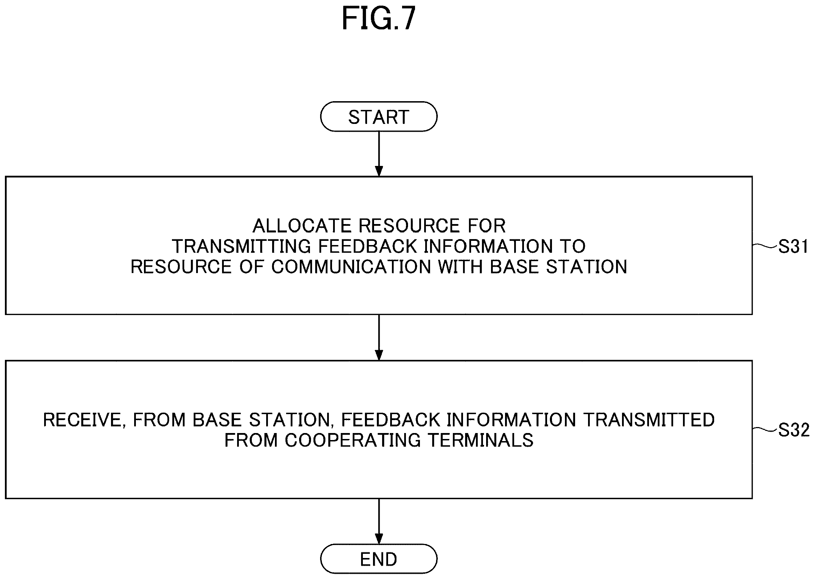

Fig. 7 is a flowchart illustrating an example (2) of feedback in an embodiment of the present invention. In step S31, UE0 allocates a resource for transmitting the feedback information to the inter-terminal communication resource. Alternatively, the resource for transmitting the feedback information may be predefined, or may be configured by the base station 10. In subsequent step S32, UE0 receives, from the base station 10, information including at least feedback information transmitted from UE1. For example, step S31 and step S32 may be operations included in step S11 in Fig. 3.

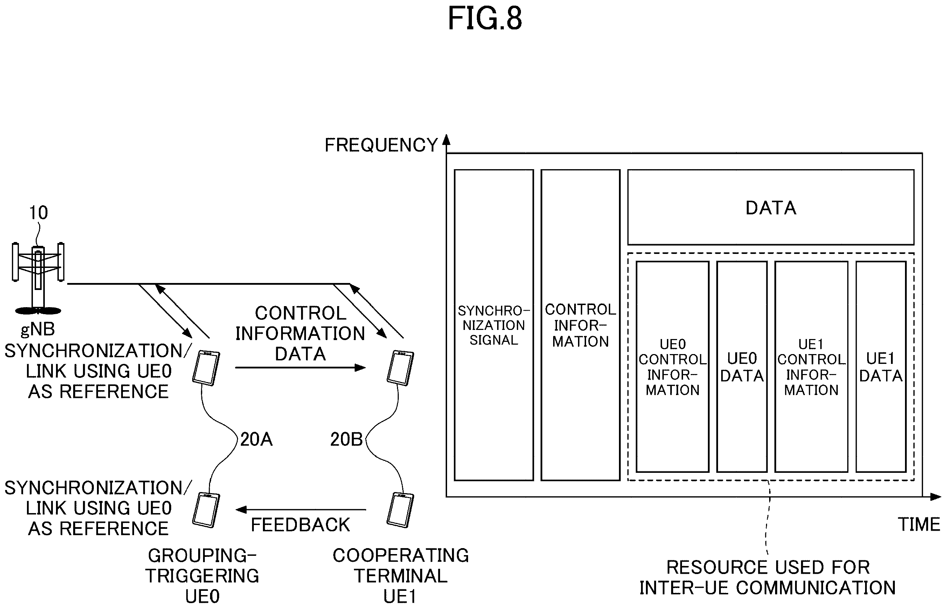

Hereinafter, the details of option 1-3) will be described. Fig. 8 is a drawing illustrating an example (3) of feedback in an embodiment of the present invention. As illustrated in Fig. 8, a cooperating terminal UE1 may return the feedback information such as HARQ-ACK and/or UE-ID, etc., to UE0 by establishing a link (synchronization) for returning the information to the grouping-triggering UE0. For example, UE1 may perform the feedback to UE0 by using the same method as a method of triggering the grouping. As illustrated in Fig. 8, synchronization or a link using UE0 as a reference may be established between UE0 and UE1, and synchronization or a link using UE1 as a reference may be established between UE0 and UE1.

For example, UE1 may transmit a control signal and data to UE0 (the destination or ID indicated by UE0). When the control signal and the data are transmitted, UE0 may perform time and frequency synchronization with respect to UE1. For example, as a synchronization method, a synchronization signal transmitted from UE1 may be used, a synchronization signal transmitted from the base station 10 may be used, or synchronization may be performed according to an external source such as a signal transmitted from GNSS (Global navigation satellite system).

As illustrated in 1) - 3) below, UE1 may transmit the feedback information such as HARQ-ACK and/or UE-ID to UE0.

1) The resource used for the feedback may be configured or predefined. For example, the resource for the feedback information may be configured from the base station 10 or the grouping-triggering UE0 to UE1 via RRC, MAC-CE (Medium Access Control - Control Element), or DCI (Downlink Control Information), or may be predefined. For example, relative positions of the resource used for the feedback relative to the control channel in the time domain and/or the frequency domain may be configured or predefined.
2) The feedback resource may be specified from UE0 to UE1 via a control channel (for example, PSCCH), or may be specified from the base station 10 to UE1 via a control channel (for example, PDCCH). With respect to the resource used for feedback, the relative position may be configured or the absolute position may be configured, based on the control channel resource.
3) The resource for the feedback may be configured by UE1. For example, UE1 may determine an available resource by sensing, and may transmit the feedback information to UE0 by using the available resource. In other words, UE1 may autonomously select the resource for transmitting the feedback information.

Note that, for example, in a case where ID of UE0 is included in the control information, the data channel (for example, PSSCH) from UE0 to UE1 is not required to be transmitted. The above-described 1), 2) and 3) may be mixed to be applied in accordance with the feedback information. For example, HARQ-ACK may be transmitted as feedback from UE1 to the base station 10 by applying the above-described 1) and UE-ID may be transmitted as feedback from UE1 to the base station 10 by applying the above-described 2).

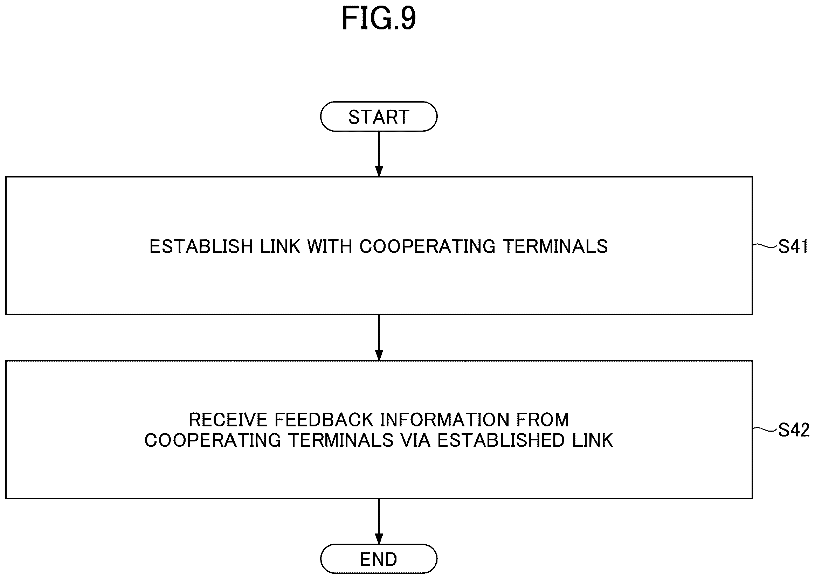

Fig. 9 is a flowchart illustrating an example (3) of feedback in an embodiment of the present invention. In step S41, UE0 and UE1 establish a link. In subsequent step S42, UE0 receives the feedback information from UE1 via the established link. For example, step S41 and step S42 may be operations included in step S11 in Fig. 3.

In the above-described option 2-1) and option 2-2), a case of 1) or 2) below may be assumed as a case in which NACK is returned from the cooperating terminal 20. Note that the "grouping information" below may be information for triggering the grouping, or may be information indicating a resource for transmitting the feedback information.

1) A case in which the cooperating terminal 20 cannot receive the grouping information using a configured resource when the cooperating terminal 20 obtains the grouping information transmission/transmission resource in advance (for example, when the base station 10 has configured the resource).
2) A case in which the cooperating terminal 20 can receive control information alone when the cooperating terminal 20 obtains the grouping information transmission/transmission resource in advance (for example, when the grouping-triggering terminal 20 has determined the resource).

Note that, in a case where none of cooperating terminals 20 can receive the control information, the grouping-triggering terminal 20 does not receive ACK. For example, in a case where the grouping-triggering terminal 20 receives ACK from at least one cooperating terminal 20, a group may be formed and the transmission data may be transmitted from each of the terminals 20 included in the group to the base station 10.

Hereinafter, the details of option 2-1) will be described. The grouping-triggering terminal 20 may retransmit the grouping-triggering signal in a case where NACK is received from a cooperating terminal 20. For example, at the time of retransmission, the transmission power may be increased step by step in accordance with the number of retransmission times. The amount of power increase may be specified by the technical specifications, may be indicated by the network, or may be determined by the terminal itself. In addition, for example, at the time of retransmission, the transmission related configuration may be changed, for example, the transmission antenna may be changed. In addition, for example, at the time of retransmission, the destination may be changed. For example, in a case where no ACK is received, the destination may be changed from a destination specifying an individual terminal 20 or a group to an unspecified destination.

Hereinafter, the details of option 2-2) will be described. In a case where the grouping-triggering terminal 20 receives NACK from a cooperating terminal 20, a report may be transmitted to the base station 10. In addition, in a case where the grouping-triggering terminal 20 receives NACK from a cooperating terminal 20, the grouping-triggering terminal 20 may request that an ID is to be allocated to the cooperating terminal 20 by the base station 10. In addition, in a case where the grouping-triggering terminal 20 receives NACK from a cooperating terminal 20, the grouping-triggering terminal 20 may request the base station 10 to update the control related to synchronization with the cooperating terminals 20.

According to an embodiment of the present invention, the terminal 20 can achieve enhancement of the coverage by triggering the grouping to form a group of terminals 20 and by causing each of the terminals 20 included in the group to transmit data to the base station 10.

In other words, characteristics of the uplink channel are enabled to be improved in a wireless communication system.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

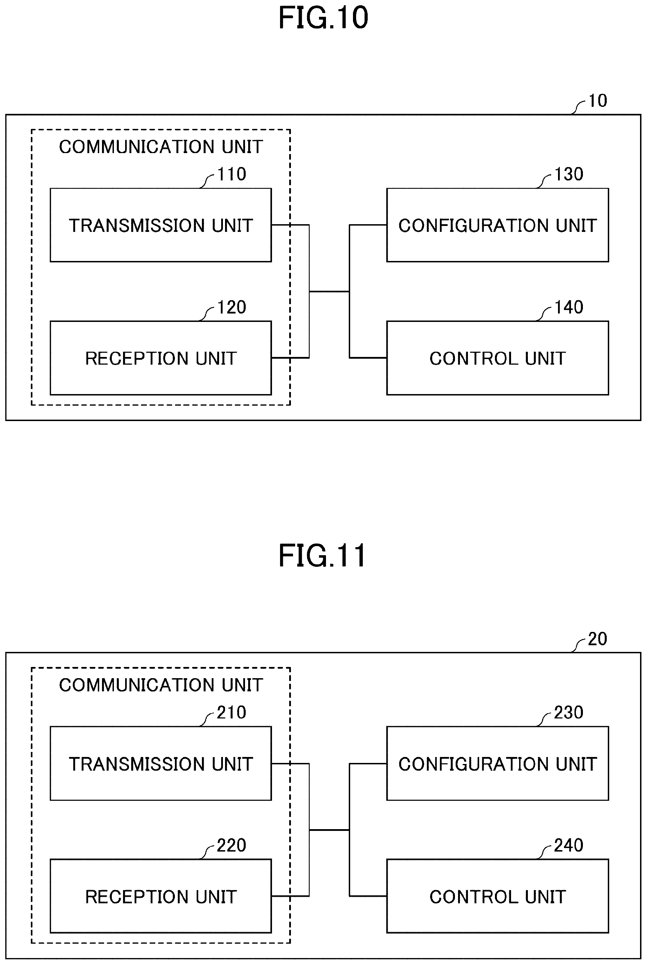

Fig. 10 is a drawing illustrating an example of a functional structure of a base station 10 according to an embodiment of the present invention. As shown in Fig. 10, the base station 10 includes a transmission unit 110, a reception unit 120, a configuration unit 130, and a control unit 140. The functional structure illustrated in Fig. 10 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the UE grouping.

The control unit 140 performs control related to UE grouping as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 11 is a drawing illustrating an example of a functional structure of a terminal 20 according to an embodiment of the present invention. As shown in FIG. 11, the terminal 20 includes a transmission unit 210, a reception unit 220, a configuration unit 230, and a control unit 240. The functional structure illustrated in Fig. 11 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the UE grouping.

The control unit 240 performs control related to UE grouping as described in an embodiment of the present invention. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 10 and Fig. 11), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are directly or indirectly connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

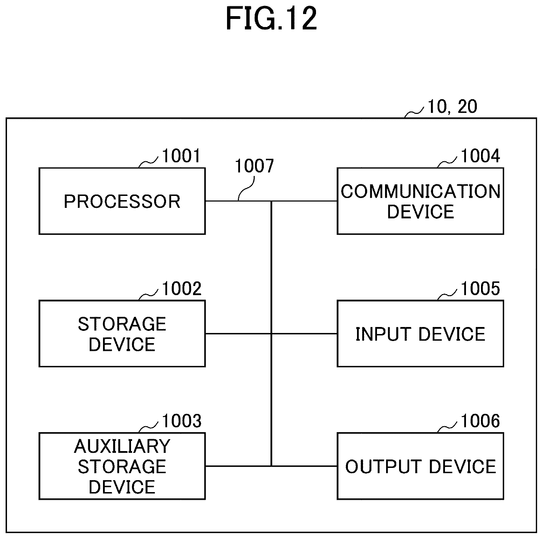

For example, the base station 10, terminal 20, etc., according to an embodiment of the present disclosure may function as a computer for processing the radio communication method of the present disclosure. Fig. 12 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 10 may be realized by control programs that are stored in the storage device 1002 and are executed by the processor 1001. Further, for example, the control unit 240 of the terminal 20 illustrated in Fig. 11 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a terminal is provided. The terminal includes: a transmission unit configured to transmit information for triggering grouping to one or more of other terminals; and a reception unit configured to receive feedback information items from the one or more of the other terminals. The transmission unit shares data with the other terminals and transmits the data to a base station together with the other terminals in a case where the feedback information items include at least one positive response.

According to the above-described configuration, the terminal 20 can achieve enhancement of the coverage by triggering the grouping to form a group of terminals 20 and by causing each of the terminals 20 included in the group to transmit data to the base station 10. In other words, characteristics of the uplink channel are enabled to be improved in a wireless communication system.

The feedback information items may include information indicating whether the grouping-triggering information is received and identifiers of the other terminals. According to the above-described configuration, the terminal 20 can achieve enhancement of the coverage by triggering the grouping to form a group of terminals 20 and by causing each of the terminals 20 included in the group to transmit data to the base station 10.

The reception unit may receive the feedback information items in a resource used for inter-terminal communication. According to the above-described configuration, the terminal 20 can achieve enhancement of the coverage by triggering the grouping to form a group of terminals 20 and by causing each of the terminals 20 included in the group to transmit data to the base station 10.

The transmission unit may transmit information indicating a resource for receiving the feedback information items, the resource being used for inter-terminal communication, to the one or more of the other terminals. According to the above-described configuration, the terminal 20 can achieve enhancement of the coverage by triggering the grouping to form a group of terminals 20 and by causing each of the terminals 20 included in the group to transmit data to the base station 10.

The reception unit may receive the feedback information items via the base station. According to the above-described configuration, the terminal 20 can achieve enhancement of the coverage by triggering the grouping to form a group of terminals 20 and by causing each of the terminals 20 included in the group to transmit data to the base station 10.

In addition, according to an embodiment of the present invention, a communication method performed by a terminal is provided. The communication method includes: transmitting grouping-triggering information to one or more of other terminals; receiving feedback information items from the one or more of the other terminals; and sharing data with the other terminals and transmitting the data to a base station together with the other terminals in a case where the feedback information items include at least one positive response.

According to the above-described configuration, the terminal 20 can achieve enhancement of the coverage by triggering the grouping to form a group of terminals 20 and by causing each of the terminals 20 included in the group to transmit data to the base station 10. In other words, characteristics of the uplink channel are enabled to be improved in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a Remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB using the common reference point of the carrier as a reference. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a transmission unit configured to transmit grouping-triggering information to one or more of other terminals; and
a reception unit configured to receive feedback information items from the one or more of the other terminals, wherein
the transmission unit shares data with the other terminals and transmits the data to a base station together with the other terminals in a case where the feedback information items include at least one positive response.

2. The terminal as claimed in claim 1, wherein
the feedback information items include information indicating whether the grouping-triggering information is received and identifiers of the other terminals.

3. The terminal as claimed in claim 2, wherein
the reception unit receives the feedback information items in a resource used for inter-terminal communication.

4. The terminal as claimed in claim 3, wherein
the transmission unit transmits information indicating a resource for receiving the feedback information items, the resource being used for inter-terminal communication, to the one or more of the other terminals.

5. The terminal as claimed in claim 2, wherein
the reception unit receives the feedback information items via the base station.

6. A communication method performed by a terminal, the communication method comprising:
transmitting grouping-triggering information to one or more of other terminals;
receiving feedback information items from the one or more of the other terminals; and
sharing data with the other terminals and transmitting the data to a base station together with the other terminals in a case where the feedback information items include at least one positive response.
